# EUROPÄISCHE PATENTSCHRIFT

(11) **EP 2 676 284 B1**
(45) Veröffentlichungstag und Bekanntmachung des Hinweises auf die Patenterteilung: **07.06.2017**
(21) Anmeldenummer: 12712530.0
(22) Anmeldetag: 16.02.2012
(51) Int. Cl.: H01H 83/22, H01H 71/44, H02H 3/33

(54) **FEHLERSTROMSCHUTZSCHALTER**
RESIDUAL-CURRENT-OPERATED CIRCUIT BREAKER
DISJONCTEUR DIFFÉRENTIEL

(30) Priorität: 16.02.2011 AT 2032011; 14.12.2011 AT 18322011
(43) Veröffentlichungstag der Anmeldung: 25.12.2013
(73) Patentinhaber: Eaton Industries (Austria) GmbH, 3943 Schrems (AT)
(72) Erfinder: NIEHOFF, Ronaldus, NL-7577 MB Oldenzaal (NL)
(74) Vertreter: Eaton IP Group EMEA
(86) Internationale Anmeldenummer: PCT/AT2012/000031
(87) Internationale Veröffentlichungsnummer: WO 2012/109684

(56) Entgegenhaltungen:
- EP-A1- 0 285 594
- EP-A1- 0 524 142
- EP-A2- 2 164 146
- AT-B- 408 044
- GB-A- 2 258 095

## Beschreibung

Die Erfindung betrifft einen Fehlerstromschutzschalter gemäß dem Oberbegriff des Patentanspruches 1.

Fehlerstromschutzschalter sind dazu vorgesehen und ausgebildet beim Auftreten eines Fehlerstromes vorgegebener Größe auszulösen und durch das Öffnen von Trennkontakten ein elektrisch nachfolgendes Teilnetz von einem vorgeschalteten Energieversorgungsnetz zu trennen, und derart Menschen vor gefährlichen Körperströmen und Anlagen vor Brand zu schützen. Fehlerstromschutzschalter, deren Auslösebedingungen lediglich von der Größe bzw. Höhe eines auftretenden Fehlerstromes abhängen, weisen jedoch den Nachteil auf, dass diese auch bei sehr kurzzeitig auftretenden Fehlerströmen größer einem Auslösefehlerstrom des betreffenden Fehlerstromschutzschalters, welche keine unmittelbare Gefahr für Menschen oder Anlagen darstellen, auslösen, wodurch nachgeschaltete technischen Anlagen unnötigerweise abgeschaltet werden. Dadurch kann es nicht nur zu Kosten aufgrund geringerer Netzverfügbarkeit kommen, sondern auch zur Beeinträchtigung technischer Abläufe.

Eine gewisse Abhilfe hinsichtlich des vorstehend dargelegten Problems schaffen Fehlerstromschutzschalter mit sog. G-Charakteristik bzw- F-Charakteristik. Derartige Fehlerstromschutzschalter sind hinsichtlich deren Auslöseverhaltens kurzzeitverzögert und sollen erst auslösen, wenn der betreffende Fehlerstrom eine gewisse zeitliche Dauer überschreitet. Allerdings hat sich gezeigt, dass bekannte Typen derartiger Fehlerstromschutzschalter beim Auftreten von Fehlerströmen, in Form oder zeitlicher Dauer lediglich einer Halbwelle, trotzdem Auslösen, obwohl derartige Fehlerströme keinerlei Gefahr darstellen. Es kommt daher nach wie vor zu unnötigen Netzabschaltungen, wodurch technische Prozesse beeinträchtigt werden, und ein Reparatur- und Instandhaltungsaufwand verursacht wird.

Die EP 2 164 146 A2 beschreibt eine reine Verzögerungsschaltung für einen Fehlerstromschutzschalter, wobei vorgesehen ist ein Auslösen des Schutzschalters zu verhindern wenn ein auftretendes Fehlerstromsignal eine gewisse zeitliche Dauer von einer halben Periodenlänge nicht überschreitet.

Die EP 285 594 A1 zeigt einen Fehlerstromschutzschalter mit einer Auslöseverzögerung von bevorzugt 10 ms. Weiters werden Auslösezeiten in Abhängigkeit der Höhe des auftretenden Fehlerstromes angegeben.

Aus der EP 524 142 A1 geht ein Fehlerstromschutzschalter hervor, mit einer um die halbe Periodenlänge des zu schützenden Netzes verzögerten Auslösung.

Aufgabe der Erfindung ist es daher einen Fehlerstromschutzschalter der eingangs genannten Art anzugeben, mit welchem die genannten Nachteile vermieden werden können, mit welchem die Anzahl unnötiger Netzabschaltungen und deren Folgen reduziert werden können, und die Verfügbarkeit elektrischer Energie verbessert werden kann.

Erfindungsgemäß wird dies durch die Merkmale des Patentanspruches 1 erreicht.

Dadurch können die Anzahl unnötiger Netzabschaltungen und deren Folgen reduziert werden, und die Verfügbarkeit elektrischer Energie verbessert werden. Dadurch kann sicher verhindert werden, dass beim Auftretenden eines Fehlerstromes von der zeitlichen Dauer etwa einer Halbwelle der Netzfrequenz, keine, dem betreffenden erfindungsgemäßen Fehlerstromschutzschalter nachgeschaltete Teilnetze abgeschaltet werden. Dadurch können die Stabilität und der Ablauf technischer Prozesse, welche an das Vorhandensein elektrischer Energie gebunden sind, verbessert werden, wobei nach wie vor der Schutz im tatsächlich auftretenden Fehlerfall weiterhin gewährleistet ist.

Die Erfindung betrifft weiters ein Verfahren zum Betrieb eines Fehlerstromschutzschalters gemäß Patentanspruch 17.

Aufgabe der Erfindung ist es daher einen Fehlerstromschutzschalter der eingangs genannten Art anzugeben, mit welchem die genannten Nachteile vermieden werden können, mit welchem die Anzahl unnötiger Netzabschaltungen und deren Folgen reduziert werden können, und die Verfügbarkeit elektrischer Energie verbessert werden kann.

Erfindungsgemäß wird dies durch die Merkmale des Patentanspruches 17 erreicht.

Dadurch werden die vorstehend angeführten vorteilhaften Wirkungen erreicht.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform eines erfindungsgemäßen Fehlerstromschutzschalters als Blockschaltbild mit einer ersten Schaltungsanordnung;
Fig. 2 Baugruppen des Fehlerstromschutzschalters gemäß Fig. 1 mit einer ersten bevorzugten Ausführungsform der ersten Schaltungsanordnung als Blockschaltbild;
Fig. 3 Baugruppen des Fehlerstromschutzschalters gemäß Fig. 1 mit einer zweiten bevorzugten Ausführungsform der ersten Schaltungsanordnung als Blockschaltbild,
Fig. 4 eine dritte bevorzugte Ausführungsform der ersten Schaltungsanordnung als Blockschaltbild;
Fig. 5 eine vierte bevorzugte Ausführungsform der ersten Schaltungsanordnung als Blockschaltbild;
Fig. 6 eine fünfte bevorzugte Ausführungsform der ersten Schaltungsanordnung als Blockschaltbild
Fig. 7 eine zweite bevorzugte Ausführungsform eines erfindungsgemäßen Fehlerstromschutzschalters als Blockschaltbild mit einer ersten Schaltungsanordnung;
Fig. 8 Baugruppen des Fehlerstromschutzschalters gemäß Fig. 7 mit einer sechsten bevorzugten Ausführungsform der ersten Schaltungsanordnung als Blockschaltbild; und
Fig. 9 eine dritte bevorzugte Ausführungsform eines erfindungsgemäßen Fehlerstromschutzschalters als Blockschaltbild mit einer ersten Schaltungsanordnung.

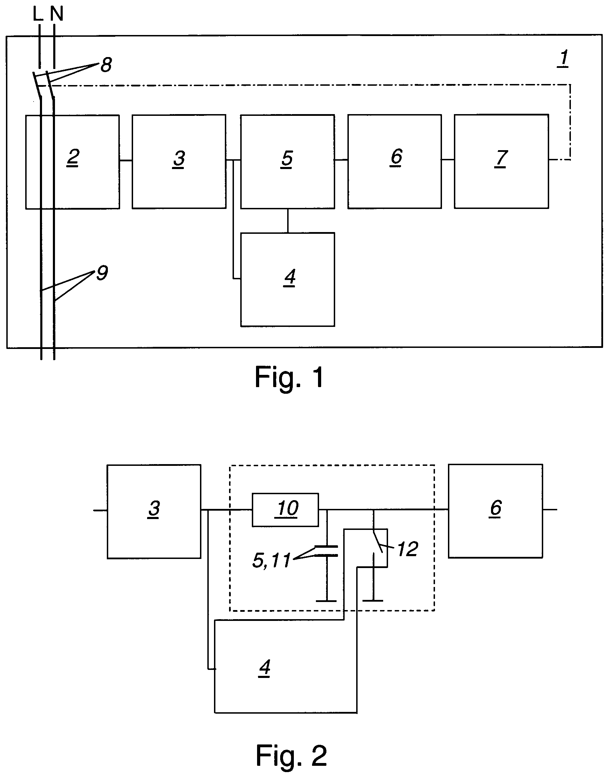

Die Fig. 1, 7 und 9 zeigen jeweils bevorzugte Ausführungsformen eines Fehlerstromschutzschalters 1 mit Schaltkontakten 8 und wenigstens einem Fehlerstromdetektor 2 zur Ermittlung eines Fehlerstromsignals, wobei der Fehlerstromschutzschalter 1 dazu ausgebildet ist, bei Auftreten eines Fehlerstroms größer einem vorgebbaren Auslösefehlerstrom das Trennen der Schaltkontakte 8 zu verursachen, wobei der Fehlerstromschutzschalter 1 eine erste Schaltungsanordnung 4 aufweist, welche ausgebildet ist, bei Auftreten eines Fehlerstromes von geringerer zeitlicher Dauer als einer halben Periodenlänge einer Netzfrequenz eines elektrischen Netzes, ein Auslösen des Fehlerstromschutzschalters 1 zu hemmen.

Durch die erfindungsgemäße Ausbildung der ersten Schaltungsanordnung 4 können die Anzahl unnötiger Netzabschaltungen und deren Folgen reduziert werden, und die Verfügbarkeit elektrischer Energie verbessert werden. Dadurch kann sicher verhindert werden, dass beim Auftretenden eines Fehlerstromes von der zeitlichen Dauer etwa einer Halbwelle der Netzfrequenz, keine, dem betreffenden erfindungsgemäßen Fehlerstromschutzschalter nachgeschaltete Teilnetze abgeschaltet werden. Dadurch können die Stabilität und der Ablauf technischer Prozesse, welche an das Vorhandensein elektrischer Energie gebunden sind, verbessert werden, wobei nach wie vor der Schutz im tatsächlich auftretenden Fehlerfall weiterhin gewährleistet ist. Insbesondere ist dabei vorgesehen, dass das Auslösen des betreffenden Fehlerstromschutzschalters 1 lediglich während der betreffenden zeitlichen Dauer gehemmt wird.

Der Fehlerstromschutzschalter 1 ist eine dem Berührungsspannungsschutz dienende Schalteinrichtung, die einen elektrischen Stromkreis unterbricht, sobald ein durch Körperschluss oder anderweitigen Erdschluss hervorgerufener Fehlerstrom in vorgegebener Höhe detektiert wird.

Besonders bevorzugt - und im einzelnen nachfolgend beschrieben - ist ein Fehlerstromschutzschalter 1 mit Schaltkontakten 8 und wenigstens einem Fehlerstromdetektor 2 zur Ermittlung eines Fehlerstromsignals, wobei der Fehlerstromschutzschalter 1 bei Auftreten eines Fehlerstroms größer einem Auslösestrom das Trennen der Schaltkontakte 8 verursacht, wobei der Fehlerstromschutzschalter 1 eine erste Schaltungsanordnung 4 mit einem ersten Schaltelement 12 aufweist, welches erste Schaltelement 12 schaltungstechnisch mit einem Energiespeicherbauteil 5 einer Auslöseschaltung verbunden ist, wobei die erste Schaltungsanordnung 4 einen ersten Timer 14 umfasst, welcher mit dem ersten Schaltelement 12 schaltungstechnisch verbunden ist, wobei der erste Timer 14 bei Detektion eines Fehlerstromsignals vorgebbarer Größe das erste Schaltelement 12 lediglich für die Dauer einer ersten Zeitdauer durchschaltet, und wobei das erste Schaltelement 12 im durchgeschalteten Zustand einen Ausgang des Energiespeicherbauteils 5 mit einer elektrischen Masse verbindet, oder das Energiespeicherbauteil 5 gegen Masse überbrückt.

Bei dem elektrischen Netz handelt es sich bevorzugt um dasjenige elektrische Netz, welches durch den Fehlerstromschutzschalter hinsichtlich dem Auftreten von Fehlerströmen überwacht wird, und welches im Fehlerfall durch den Fehlerstromschutzschalter abgeschaltet werden soll.

Um den elektrischen Stromkreis zu unterbrechen, weist ein Fehlerstromschutzschalter 1 Schaltkontakte 8 auf, welche im Falle eines als gefährlich erachteten Fehlerstromes den elektrischen Stromkreis unterbrechen, indem die Schaltkontakte 8 geöffnet werden.

Der Vorgang, in dem der Fehlerstromschutzschalter 1 den elektrischen Stromkreis unterbricht, wird in Folge als das Auslösen des Fehlerstromschutzschalters 1 bezeichnet.

Um den Fehlerstrom zu detektieren, weist ein Fehlerstromschutzschalter 1 wenigstens einen Fehlerstromdetektor 2 auf. Der Fehlerstromdetektor 2 überwacht dabei die elektrischen Leitungen 9, welche ein elektrisch nachfolgendes Teilnetz mit einem vorgeschalteten Energieversorgungsnetz verbinden. Der Fehlerstromdetektor 2 kann unterschiedlich ausgebildet sein.

Als besonders vorteilhaft hat es sich erwiesen, den Fehlerstromdetektor 2 als Stromwandler bzw. als Summenstromwandler auszubilden. In anderen möglichen Ausführungsformen kann der Fehlerstromdetektor 2 als Förstersonde (englisch: fluxgate magnetometer) oder als Shuntwiderstand oder Kombinationen der oben genannten Ausführungsformen ausgebildet sein.

Der Fehlerstromdetektor 2 bildet den Fehlerstrom, welcher die Differenz zwischen zufließenden und abfließenden elektrischen Strom ist, in ein Fehlerstromsignal ab.

In den Figuren sind bevorzugte Ausführungen der gegenständlichen Erfindung jeweils als Blockschaltbild dargestellt. Die Verbindungslinien zwischen den einzelnen Blöcken stellen dabei nicht zwingend nur eine einzelne elektrische Verbindung dar, sondern repräsentieren die Summe aller nötigen schaltungstechnischen Verbindungen zwischen zwei Blöcken, welche nicht zwingend nur elektrisch sein müssen.

In Fig. 1 wird eine erste bevorzugte technische Ausführung des Fehlerstromschutzschalters 1 als Blockschaltbild dargestellt.

Die bevorzugte Ausführungsform weist einen Fehlerstromdetektor 2 auf, welcher den Fehlerstrom in ein Fehlerstromsignal umwandelt. Der Fehlerstromdetektor 2 ist dabei bevorzugt als Summenstromwandler ausgebildet, welcher einen Wandlerkern, wenigstens eine Primärwicklung, welche in der Regel durch die Leiter des zu schützenden elektrischen Netzes gebildet sind, und wenigstens eine Sekundärwicklung umfasst. Die bevorzugte Ausführungsform des Fehlerstromschutzschalters 1 weist einen Gleichrichter 3 auf, welcher das Fehlerstromsignal gleichrichtet.

In dieser bevorzugten Ausführungsform wird das Fehlerstromsignal in einem Energiespeicherbauteil 5, insbesondere wenigstens in einem Kondensator 11, kumuliert. Dadurch kann der Fehlerstromschutzschalter 1 die zum Auslösen erforderliche Energie aus dem Fehlerstromsignal beziehen.

Der Energiespeicherbauteil 5 kann in einer besonders bevorzugten Ausführungsform als Tiefpassfilter, bzw. als Teil eines Tiefpassfilters ausgebildet sein.

Die bevorzugte Ausführungsform weist einen Komparator 6 auf, welcher den Ladezustand des Energiespeicherbauteils 5 mit einem vorgegebenen Wert entsprechend vergleicht, welcher Wert einem Auslösefehlerstrom des betreffenden Fehlerstromschutzschalters 1 entspricht. Der Auslösefehlerstrom ist in der Regel geringer als ein Nennfehlerstrom eines bestimmten Typs eines Fehlerstromschutzschalters 1. So kann beispielsweise der tatsächliche Auslösefehlerstrom eines Fehlerstromschutzschalters 1 mit einem Nennfehlerstrom von 30 mA bevorzugt 75% des Nennfehlerstromes liegen, und etwa 22,5 mA betragen. Die tatsächliche Höhe bzw. Größe des Auslösefehlerstrom des Fehlerstromschutzschalters 1 kann etwa durch einen Verstärkungsfaktor des Gleichrichters 3 oder des Komparators 6 beeinflusst bzw. festgelegt werden.

Die bevorzugte Ausführungsform des Fehlerstromschutzschalters 1 weist weiters einen Aktuator 7 auf. Der Eingang des Aktuators 7 ist mit dem Ausgang des Komparators 6 schaltungstechnisch verbunden. Der Aktuator 7 betätigt die Schaltkontakte 8 und unterbricht damit den Stromkreis, wenn dieser vom Komparator 6 angesteuert wird.

Es ist vorgesehen, dass ein Fehlerstromschutzschalter 1 eine erste Schaltungsanordnung 4 aufweist, welche ausgebildet ist, bei Auftreten eines Fehlerstromes von maximaler zeitlicher Dauer als einer halben Periodenlänge der Netzfrequenz eines zu schützenden elektrischen Netzes, ein Auslösen des Fehlerstromschutzschalters 1 zu hemmen bzw. zu unterbinden oder zu verhindern.

Der betreffende Fehlerstromschutzschalter 1 weist daher mit anderen Worten eine erste Schaltungsanordnung 4 auf, zum Hemmen des Auslösens des Fehlerstromschutzschalters 1 bei Auftreten eines Fehlerstromes von maximaler zeitlicher Dauer einer halben Periodenlänge der Netzfrequenz eines elektrischen Netzes.

Dadurch kann eine Reduzierung der unnötigen Netzabschaltungen erreicht werden, indem zeitlich kurze, und in der Regel für den Menschen unwirksame Fehlerströme zu keiner Auslösung des betreffenden Fehlerstromschutzschalters 1 führen. Insbesondere treten Fehlerströme auf, welche ein singuläres Ereignis darstellen, und mit einem Nulldurchgang der Netzspannung bzw. des Netzstromes verlöschen. Besonders bevorzugt ist daher vorgesehen, dass die erste Schaltungsanordnung 4 bei Auftreten eines Fehlerstromes von maximaler zeitlicher Dauer einer halben Periodenlänge der Netzfrequenz des zu schützenden elektrischen Netzes, ein Auslösen des Fehlerstromschutzschalters 1 hemmt. Dies wird durch herkömmliche kurzzeitverzögerte Fehlerstromschutzschalter 1 nicht gewährleistet.

Die halbe Periodenlänge der Netzfrequenz für die am häufigsten verwendeten Versorgungsnetze beträgt 10 ms für die z. B. in Europa verwendete Netzfrequenz von 50 Hz, 8,3 ms für die z. B. in Nordamerika verwendete Netzfrequenz von 60 Hz und 29,9 ms für das Versorgungsnetz der Eisenbahn in Mitteleuropa, welches eine Netzfrequenz von 16,7 Hz hat. Die halbe Periodenlänge der Netzfrequenz eines zu schützenden elektrischen Netzes wird in Folge als die halbe Periodenlänge bezeichnet.

Der Ausdruck "von geringerer zeitlicher Dauer als einer halben Periodenlänge" bezeichnet dabei bevorzugt Fehlerströme mit einer zeitlichen Dauer bis zur halben Periodenlänge, wobei bevorzugt der exakte Wert der halben Periodenlänge mit umfasst ist.

Bevorzugt ist vorgesehen, dass ein erfindungsgemäßer Fehlerstromschutzschalter 1 auf die genormte bzw. gesetzlich verankerte Netzfrequenz eingestellt ist. Es kann, insbesondere in Gebieten mit hoher Netzfrequenzschwankung, etwa in weniger entwickelten Gebieten, vorgesehen sein, einen erfindungsgemäßen Fehlerstromschutzschalter 1 auf eine Netzfrequenz einzustellen bzw. auszulegen, welche erfahrungsgemäß einer regional maximal auftretenden Netzfrequenz entspricht.

In der Folge wird eine erste bevorzugte Ausführungsform eines Fehlerstromschutzschalters 1 beschrieben. Im Anschluss werden weitere bevorzugte Ausführungsformen beschrieben.

Die erste bevorzugte Ausführungsform des Fehlerstromschutzschalters 1 gemäß Fig.1 weist eine solche erste Schaltungsanordnung 4 auf, welche zur Deaktivierung und/oder Unwirksammachung einer Auslöseschaltung des Fehlerstromschutzschalters 1 während einer ersten Zeitdauer ausgebildet ist.

Unter Deaktivierung und/oder Unwirksammachung einer Auslöseschaltung versteht man, dass das Trennen der Schaltkontakte 8 und die damit folgende Unterbrechung des Stromkreises des zu überwachenden elektrischen Netzes unterbunden wird. Dies kann durch mehrere unterschiedliche bevorzugte Ausführungsformen erreicht werden, welche nachfolgend dargestellt werden.

Es hat sich gezeigt, dass insbesondere bei der bevorzugten Ausbildung des Fehlerstromdetektors 2 als Summenstromwandler, elektrische Energie des Fehlerstromes in elektrischen Bauteilen, etwa Teilen des Summenstromwandlers 2, gespeichert sein kann, welche nach Verlöschen eines kurzzeitig auftretenden Fehlerstromes abgegeben wird, und welche ausreichend ist um herkömmliche Fehlerstromschutzschalter 1 auszulösen. Es hat sich daher als besonders Vorteilhaft zum Erzielen der angestrebten Wirkung herausgestellt, wenn die erste Schaltungsanordnung 4 das Auslösen des Fehlerstromschutzschalters bei Auftreten eines kurzzeitigen Fehlerstromes für eine größere Zeitdauer hemmt, als die tatsächliche Dauer des Auftretens des betreffenden Fehlerstromes.

Bevorzugt ist daher vorgesehen, dass die erste Zeitdauer 75%, insbesondere 60%, vorzugsweise wenigstens 50%, der Periodenlänge des zu schützenden elektrischen Netzes beträgt. Bei einer Netzfrequenz von 50 Hz beträgt die erste Zeitdauer, während dieser die Auslösung des Fehlerstromschutzschalters gehemmt ist, insbesondere 15 ms, vorzugsweise 12 ms, und wenigstens 10ms. Dabei ist insbesondere vorgesehen, dass die erste Zeitdauer maximal die vorstehend angeführten Zeitdauern beträgt. Dabei ist insbesondere vorgesehen, lediglich während dieser Zeitdauer ein Auslösen des Fehlerstromschutzschalters zu hemmen.

Bei einem erfindungsgemäßen Fehlerstromschutzschalter 1 ist vorgesehen, dass bei Auftreten bzw. Detektieren eines kurzzeitigen Fehlerstromes, von geringerer zeitlicher Dauer als einer halben Periodenlänge des zu schützenden elektrischen Netzes, das Auslösen des Fehlerstromschutzschalters 1 wenigstens für die Dauer des tatsächlichen Auftretens des kurzzeitigen Fehlerstromes gehemmt wird, wobei insbesondere vorgesehen ist, die Auslösung darüber hinaus für eine weitere Zeitspanne zu hemmen. Diese weitere Zeitspanne verhindert dabei gegebenenfalls ein verspätetes Auslösen des Fehlerstromschutzschalters 1 aufgrund gespeicherter Energie, welche durch den kurzen Fehlerstrom verursacht wurde. Die gesamte Zeitdauer, während derer das Auslösen des Fehlerstromschutzschalters 1 bevorzugt gehemmt ist, ist dabei bei bevorzugten Ausführungsformen - unter Vernachlässigung der Schaltzeiten der verwendeten elektrischen Bauteile - die erste Zeitdauer.

In der in Fig.1 gezeigten ersten bevorzugten Ausführungsform ist der Eingang der ersten Schaltungsanordnung 4 mit dem Ausgang des Gleichrichters 3 schaltungstechnisch verbunden.

In dieser bevorzugten Ausführungsform ist die erste Schaltungsanordnung 4 mit dem Energiespeicherbauteil 5 schaltungstechnisch verbunden um die Auslösung des Fehlerstromschutzschalters 1 zu hemmen. Dies kann z. B. geschehen, indem die erste Schaltungsanordnung 4 den Energiespeicherbauteil 5 entlädt, bzw. ein weiteres Laden des Energiespeicherbauteils 5 verhindert. Während der ersten Zeitdauer wird das Energiespeicherbauteil 5 nicht weiter aufgeladen.

Eine weitere mögliche nicht dargestellte Ausführungsform der Erfindung kann darin bestehen, dass die erste Schaltungsanordnung 4 schaltungstechnisch mit dem Komparator 6 oder dem Aktuator 7 verbunden ist, um das Auslösen des Fehlerstromschutzschalters 1 zu hemmen, z. B. durch eine mechanische Sperre des Auslösemechanismus.

Bei der ersten bevorzugten Ausführungsform gemäß Fig. 2 ist der Fehlerstromschutzschalter 1 derart ausgebildet, dass die erste Schaltungsanordnung 4 zum Entladen eines Energiespeicherbauteils 5 der Auslöseschaltung während der ersten Zeitdauer nach dem Detektieren eines Fehlerstromes vorgebbarer Größe, insbesondere nach dem Detektieren eines Fehlerstromes größer dem Auslösefehlerstrom, ausgebildet ist.

In der ersten bevorzugten Ausführungsform umfasst die erste Schaltungsanordnung 4 ein erstes Schaltelement 12, welches schaltungstechnisch mit dem Energiespeicherbauteil 5 verbunden ist.

Das Energiespeicherelement in der ersten bevorzugten Ausführungsform weist einen Kondensator 11 und einen elektrischen Widerstand 10 auf, welcher als Ladewiderstand für den Kondensator dient.

In der ersten bevorzugten Ausführungsform ist das erste Schaltelement 12 als Halbleiterschalter ausgebildet, besonders als Sperrschicht-Feldeffekt-Transistor, da dadurch ein geringer Bauteilaufwand erzielt werden kann. Des weiteren ist ein Halbleiterschalter weniger fehleranfällig als ein mechanischer Schalter und ermöglicht eine leistungsarme Ansteuerung.

Die erste bevorzugte Ausführungsform weist ein Schaltelement 12 auf, welches in einem durchgeschalteten Zustand einen Ausgang des Energiespeicherbauteils 5 mit einer elektrischen Masse verbindet.

In der ersten bevorzugten Ausführungsform wird im Falle eines Fehlerstromes das erste Schaltungselement 4 den Kondensator 11 des Energiespeicherelementes 5 für die erste Zeitdauer entladen und damit ein Auslösen des Fehlerstromschutzschalters verhindern, falls der Fehlerstrom nicht länger als eine halbe Periodenlänge anhält.

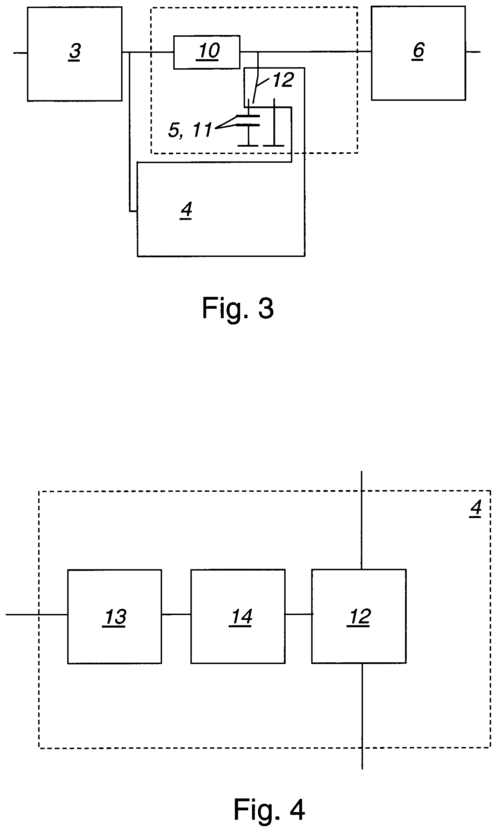

Bei der zweiten bevorzugten Ausführungsform gemäß Fig. 3 ist der Fehlerstromschutzschalter 1 derart ausgebildet, dass die erste Schaltungsanordnung 4 ein weiteres Aufladen eines Energiespeicherbauteils 5 der Auslöseschaltung während der ersten Zeitdauer nach dem Detektieren eines Fehlerstromes vorgebbarer Größe, insbesondere nach dem Detektieren eines Fehlerstromes größer dem Auslösefehlerstrom, verhindert.

Die zweite bevorzugte Ausführungsform weist ebenfalls ein erstes Schaltelement 12 auf, welches gleich ausgebildet sein kann wie in der ersten bevorzugten Ausführungsform.

Das erste Schaltelement 12 befindet sich in der zweiten bevorzugten Ausführungsform als Zweiwegschließer schaltungstechnisch vor dem Kondensator 11. In einem ersten Schaltzustand des ersten Schaltelementes 12 ist das erste Schaltelement 12 mit dem Kondensator 11 verbunden, wodurch dieser durch das Fehlerstromsignal aufgeladen werden kann. Im zweiten Schaltzustand des ersten Schaltelementes 12 löst das erste Schaltelement 12 die Verbindung mit dem Kondensator und schaltet zu einem zweiten Kontakt, welcher mit Masse verbunden ist, wodurch das Fehlerstromsignal über eine elektrische Masse abgeleitet wird.

Dadurch wird im zweiten Schaltzustand des ersten Schaltelementes 12 der Kondensator 11 nicht entladen, sondern umgangen. Das Energiespeicherbauteil 5 wird dabei gegen Masse überbrückt. Dadurch wird der Kondensator 11 nicht entladen, wenn ein kurzzeitiger hoher Fehlerstrom auftritt, sondern behält seinen allfälligen Ladungszustand vor dem Auftreten des kurzfristigen Fehlerstromes bei. Das Fehlerstromsignal wird während der ersten Zeitdauer am Kondensator vorbei zur Masse abgeführt. Dadurch kann erreicht werden, dass der Fehlerstromschutzschalter weiterhin auf einen relevanten elektrischen Fehler reagiert, während ein zwischenzeitlich auftretendes kurzzeitiges Fehlerstromereignis ausgeblendet wird, und keine vorzeitige und wirkungsmäßig unbegründete Auslösung verursacht.

Eine dritte bevorzugte Ausführungsform der ersten Schaltungsanordnung 4 ist in Fig. 4 dargestellt.

Die erste Schaltungsanordnung 4 umfasst in dieser möglichen Ausführungsform eine zweite Schaltungsanordnung 13, zum Vergleich des Fehlerstromsignals mit einem vorgebbaren Wert, welcher den Auslösefehlerstrom repräsentiert. Dieser Wert kann auch als Grenzwert bezeichnet werden. Dadurch soll sichergestellt werden, dass die erste Schaltungsanordnung 4 nur bei einem Fehlerstrom höher dem Auslösefehlerstrom ausgelöst wird.

Weiters umfasst die erste Schaltungsanordnung 4 in der dritten bevorzugten Ausführungsform gemäß Fig. 4 ein erstes Schaltelement 12, welches bevorzugt gemäß den beiden vorstehend beschriebenen ersten und/oder zweiten bevorzugten Ausführungsformen ausgebildet ist.

In der dritten bevorzugten Ausführungsform weist die erste Schaltungsanordnung 4 einen ersten Timer 14 auf, zur Ansteuerung des ersten Schaltelements 12 während der ersten Zeitdauer.

Bevorzugt schaltet der erste Timer 14 bei Detektion eines Fehlerstromsignals vorgebbarer Größe das erste Schaltelement 12 lediglich für die Dauer der ersten Zeitdauer durch.

Gemäß einer weiteren bevorzugten Ausführungsform der gegenständlichen Erfindung ist vorgesehen, dass die Dauer der ersten Zeitdauer vorgebbar veränderbar ist. Insbesondere ist in diesem Zusammenhang vorgesehen, dass die erste Zeitdauer unmittelbar an einem erfindungsgemäßen Fehlerstromschutzschalter 1 einstellbar ist. Dabei kann vorgesehen sein, dass ein entsprechend ausgebildeter Fehlerstromschutzschalter 1 ein zugängliches Einstellelement aufweist, mit welchem entweder unmittelbar die erste Zeitdauer einstellbar ist, und/oder mit welchem etwa zwischen unterschiedlichen Netzfrequenzen umgeschaltet werden kann, etwa von 50 Hz auf 60 Hz. Dadurch kann der betreffende Fehlerstromschutzschalter an unterschiedliche Einsatzumgebungen angepasst werden. Es kann auch vorgesehen sein, dass ein entsprechender Fehlerstromschutzschalter 1 eine Busschnittstelle aufweist, und die erste Zeitdauer rechnergesteuert über die Busschnittstelle einstellbar ist.

Der erste Timer 14 ist dabei als elektronische Schaltung, besonders bevorzugt umfassend Flipflops, ausgebildet. Dadurch kann in vorteilhafter Weise ein geringer Bauelementaufwand erzielt werden. In dieser vorgegebenen Zeitdauer gibt der erste Timer 14 ein Signal am Ausgang aus.

In der in Fig. 4 gezeigten dritten bevorzugten Ausführungsform ist der Ausgang der zweiten Schaltungsanordnung 13 mit dem Eingang des ersten Timers 14 schaltungstechnisch verbunden. Der Eingang des Timers 14 kann besonders bevorzugt flankengesteuert sein. Flankengesteuert bedeutet hier, dass der erste Timer 14 bei einer ansteigenden Flanke des Eingangssignals aktiviert wird.

Unter dem Begriff "Aktivieren" eines ersten bzw. zweiten Timers 14, 15 ist im Sinn der gegenständlichen Erfindung bevorzugt zu verstehen, dass das Ausgangsignal des ersten Timers 14 und/oder des zweiten Timers 15 vorgebbar seinen jeweiligen Zustand ändert, insbesondere dass das Ausgangssignal von "Low" auf "High" gesetzt wird.

In der in Fig. 4 gezeigten dritten bevorzugten Ausführungsform ist der Ausgang des ersten Timers 14 mit dem Eingang des ersten Schaltelementes 12 schaltungstechnisch verbunden. Dadurch kann erreicht werden, dass bei einem Fehlerstromsignal, welches größer als der vorgegebene Wert der zweiten Schaltungsanordnung 13 ist, der erste Timer 14 gestartet wird und für die Dauer der ersten Zeitdauer das erste Schaltungselement 12 durchgeschaltet wird. Dadurch kann ein unnötiges Auslösen des Schutzschalters verhindert werden.

In weiterer Ausgestaltung der Erfindung kann vorgesehen sein, dass die erste Schaltungsanordnung 4 einen zweiten Timer 15 umfasst, zur Deaktivierung des ersten Timers 14 während einer, an die erste Zeitdauer anschließenden, zweiten Zeitdauer. Dadurch kann verhindert werden, dass der erste Timer 14 bei kurz aufeinander folgenden kurzfristigen Fehlerströmen wiederholt die Auslösung des Fehlerstromschutzschalters 1 verhindert, da in diesem Fall das Auslösen des Fehlerstromschutzschalters 1 wünschenswert wäre, da derartige Fehlerströme negative Wirkungen auf den Menschen ausüben können.

In Weiterführung der Erfindung kann ein Ausgang der zweiten Schaltungsanordnung 13 schaltungstechnisch mit einem Eingang des ersten Timers 14 und/oder des zweiten Timers 15 verbunden sein. Dadurch wird der erste Timer 14 und/oder der zweite Timer 15 nach dem Detektieren eines Fehlerstromsignals, welches größer ist als der vorgegebene Wert der zweiten Schaltungsanordnung 13, aktiviert. Die zweite Schaltungsanordnung 13 ist dabei etwa als Komparatorschaltung ausgebildet.

In Weiterbildung der Erfindung kann ein Ausgang des zweiten Timers 15 schaltungstechnisch mit einem Eingang des ersten Timers 14 verbunden sein. Dadurch kann der erste Timer 14 vom zweiten Timer 15 aktiviert oder deaktiviert werden.

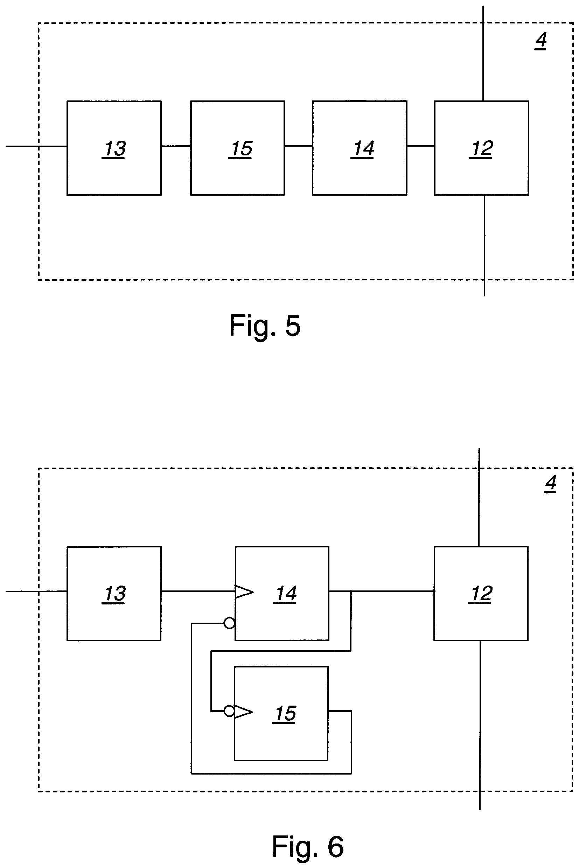

Zwei mögliche bevorzugte technische Ausführungsformen der ersten Schaltungsanordnung 4 sind in Fig. 5 und Fig. 6 dargestellt.

Dabei ist die zweite Zeitdauer größer als die erste Zeitdauer, um eine aufeinander folgende Aktivierung des ersten Timers 14 zu verhindern.

Die zweite Zeitdauer ist bevorzugt etwa so lange, wie die Auslösezeit des Fehlerstromschutzschalters 1 bei Auftreten eines Fehlerstromes von der Größe bzw. Höhe des Auslösefehlerstromes. Dadurch kann sichergestellt werden, dass ein nachfolgend bzw. parallel zu einem kurzzeitigen bzw. singulären Fehlerstromereignes auftretender Fehlerstrom auch tatsächlich ein Auslösen des Fehlerstromschutzschalters 1 verursachen kann, sofern ein solches sicherheitstechnisch erforderlich ist. Die konkrete Länge der zweiten Zeitdauer ist daher vom jeweiligen Nenn- bzw. Auslösefehlerstrom eines Fehlerstromschutzschalters 1 abhängig.

Der zweite Timer 15 ist dabei ebenfalls als elektronische Schaltung, besonders bevorzugt umfassend Flipflops, ausgebildet. Dadurch kann in vorteilhafter Weise ein geringer Bauelementaufwand erzielt werden. In dieser zweiten Zeitdauer gibt der zweite Timer 15 ein Signal mit konstantem Pegel am Ausgang aus.

Die Fig. 5 zeigt die vierte bevorzugte Ausführungsform der ersten Schaltungsanordnung 4, wobei der Ausgang der zweiten Schaltungsanordnung 13 schaltungstechnisch mit dem Eingang des zweiten Timers 15 verbunden ist, dessen Ausgang wiederum schaltungstechnisch mit dem Eingang des ersten Timers 14 verbunden ist, welcher wiederum das erste Schaltelement 12 steuert. Die Eingänge des ersten Timers 14 und des zweiten Timers 15 sind dabei besonders bevorzugt flankengesteuert.

Wenn ein Fehlerstromsignal, welches größer als der vorgegebene Wert der zweiten Schaltanordnung 13 ist, am Eingang der zweiten Schaltanordnung 13 anliegt, wird der zweite Timer 15 aktiviert, welcher dann ein Signal an seinem Ausgang ausgibt. Da der erste Timer 14 mit dem Ausgang des zweiten Timers 15 schaltungstechnisch verbunden ist, wird dieser dabei aktiviert. Da der erste Timer 14 flankengesteuert ist, wird er nur bei der Aktivierung des zweiten Timers 15 aktiviert. In weiterem Zeitraum der zweiten Zeitdauer kann der erste Timer 14 nicht mehr aktiviert werden, da an seinem Eingang das konstante Signal vom zweiten Timer 2 anliegt, unabhängig davon, welche Fehlerstromsignale eintreffen.

Die Fig. 6 zeigt eine fünfte bevorzugte Ausführungsform der ersten Schaltungsanordnung 4, wobei der erste Timer 14 zwei Eingänge aufweist. Der Ausgang der zweiten Schaltungsanordnung 13 ist schalttechnisch mit dem Eingang des ersten Timers 14 verbunden, welcher das erste Schaltelement 12 steuert. Der Ausgang des ersten Timers 14 ist weiters mit dem invertiert flankengesteuerten Eingang des zweiten Timers 15 schaltungstechnisch verbunden, dessen Ausgang wiederum mit einem dominanten invertierten zustandsgesteuerten Eingang des ersten Timers 14 schaltungstechnisch verbunden ist.

Wenn in der fünften bevorzugten Ausführungsform ein Fehlerstromsignal, welches größer als der vorgegebene Wert der zweiten Schaltanordnung 13 ist, am Eingang der zweiten Schaltanordnung 13 anliegt, wird der erste Timer 14 aktiviert, welcher dann ein Signal an seinem Ausgang ausgibt. Am Ende der ersten Zeitdauer wird nun der zweite Timer 15 aktiviert, da dieser mit dem Ausgang des ersten Timers 14 invertiert flankengesteuert verbunden ist. Invertiert flankengesteuert bedeutet, das die Aktivierung des zweiten Timers 15 bei der abfallenden Flanke des Signals vom ersten Timer 14 erfolgt. Da der Ausgang des zweiten Timers 15 mit einem dominanten Rücksetzeingang des ersten Timers 14 schaltungstechnisch verbunden ist, unterdrückt der zweite Timer 15 eine nochmalige Aktivierung des ersten Timers 14 für die Dauer der zweiten Zeitdauer.

Eine sechste bevorzugte Ausführungsform, welche als besonders vorteilhaft angesehen wird, weist die Merkmale der ersten und der vierten bevorzugten Ausführungsform auf, welche in der Fig. 1, der Fig. 2 und der Fig. 5 dargestellt sind.

Diese sechste bevorzugte Ausführungsform umfasst einen Fehlerstromdetektor 2, welcher den Fehlerstrom in ein Fehlerstromsignal umwandelt, einen Verstärker, welcher das Fehlerstromsignal aktiv verstärkt, einen Gleichrichter 3 zum Gleichrichten des Fehlerstromsignals, einen Energiespeicherbauteil 5, einen Komparator 6, welcher den Ladungszustand des Energiespeicherbauteils 5 mit einem vorgegebenen Wert vergleicht, einen zweiten Verstärker, welcher das Signal vom Komparator 6 verstärkt, sowie einen Aktuator 7, welcher die Schaltkontakte 8 betätigt und somit die elektrischen Leitungen 9 unterbrechen kann.

Die sechste bevorzugte Ausführungsform weist eine erste Schaltungsanordnung 4 auf, deren Eingang mit dem Ausgang des Gleichrichters 3 schaltungstechnisch verbunden ist.

Die erste Schaltungsanordnung 4 weist eine zweite Schaltungsanordnung 13 auf, deren Eingang mit dem Ausgang des Gleichrichters 3 verbunden ist und deren Ausgang schaltungstechnisch mit dem Eingang eines zweiten Timers 15 verbunden ist, dessen Ausgang wiederum schaltungstechnisch mit dem Eingang eines ersten Timers 14 verbunden ist, welcher wiederum das erste Schaltelement 12 steuert, welches in einem durchgeschalteten Zustand einen Ausgang des Energiespeicherbauteils 5 mit einer elektrischen Masse verbindet.

Dadurch wird verhindert, dass der Fehlerstromschutzschalter 1 bei einem Fehlerstrom, welcher kürzer als die halbe Periodenlänge ist, ausgelöst wird. Weiters verhindert der zweite Timer 15 in der ersten Schaltungsanordnung 4, dass der erste Timer 14 bei kurz aufeinander folgenden kurzfristigen Fehlerströmen wiederholt die Auslösung des Fehlerstromschutzschalters verhindert.

Nachfolgend wird ein Verfahren zum Betrieb des vorstehend beschriebenen Fehlerstromschutzschalters 1 beschrieben.

Ein auftretender Fehlerstrom in einem zu überwachenden elektrischen Netz wird vom Fehlerstromdetektor 2 detektiert, wobei der Fehlerstrom in ein Fehlerstromsignal umgewandelt wird.

Bevorzugt ist vorgesehen, dass das Fehlerstromsignal verstärkt wird.

Weiters wird das Fehlerstromsignal noch gleichgerichtet.

In weiterer Folge wird ein Energiespeicherbauteil 5 durch das Fehlerstromsignal aufgeladen.

Nachfolgend wird der Ladungszustand des Energiespeicherbauteils 5 mit einem vorgegebenen Wert des Komparators 6 verglichen, welcher den Auslösefehlerstrom repräsentiert.

Wenn der Ladezustand der Energiespeicherschaltung 5 größer ist, als der vorgegebene Wert des Komparators 6, wird ein Aktuator 7 aktiviert, welcher die Schaltkontakte 8, über welche die elektrischen Leitungen 9 des zu überwachenden elektrischen Netzes geführt werden, betätigt, wodurch der elektrische Stromkreis unterbrochen wird.

Dabei ist bevorzugt vorgesehen, dass das Signal des Komparators 6 nachfolgend aktiv verstärkt wird.

Im Wesentlichen gleichzeitig wird das gleichgerichtete Fehlerstromsignal mit einem, einem Auslösefehlerstrom entsprechenden Vergleichswert verglichen, wobei wenn das Fehlerstromsignal größer als der Vergleichswert ist, ein Auslösen des Fehlerstromschutzschalters 1 für die erste Zeitdauer gehemmt wird.

Dadurch kann in vorteilhafter Weise verhindert werden, dass der Fehlerstromschutzschalter 1 im Falle eines Fehlerstromes, welcher größer als der Auslösefehlerstrom ist, aber von zeitlicher Dauer kürzer als die bzw. gleich der halben Periodendauer des überwachten elektrischen Netzes, und daher ungefährlich, ausgelöst wird, und damit den Stromkreis unterbricht. Dadurch kann die Anzahl unnötiger Netzabschaltungen und deren Folgen reduziert werden.

Das Auslösen des Fehlerstromschutzschalters 1 kann auf verschiedene Arten gehemmt werden.

In der ersten bevorzugten Ausführungsform kann während der ersten Zeitdauer nach dem Detektieren eines Fehlerstromes der Energiespeicherbauteil 5 entladen werden.

In einer zweiten bevorzugten Ausführungsform kann während der ersten Zeitdauer nach dem Detektieren eines Fehlerstromes das Fehlerstromsignal am Energiespeicherbauteil 5 vorbeigeführt werden. Dadurch kann eine Entladung des Energiespeicherbauteils 5 verhindert werden und der Energiespeicherbauteil 5 behält seinen Ladungszustand, welchen der Energiespeicherbauteil 5 vor dem Eintreffen des Fehlerstromsignals aufwies, bei.

Gemäß einer anderen Ausführungsform der Erfindung kann auch der Komparator 6 und/oder der Aktuator 7 für die erste Zeitdauer gehemmt werden.

Gemäß einer besonders bevorzugten Ausführungsform des Fehlerstromschutzschalters 1 wird während einer zweiten Zeitdauer nach der ersten Zeitdauer eine Hemmung der Auslösung verhindert.

Dies kann in einer Variante der Erfindung dadurch geschehen, dass während einer zweiten Zeitdauer nach der ersten Zeitdauer eine Entladung des Energiespeicherbauteils 5 verhindert wird. Dadurch kann verhindert werden, dass bei kurz aufeinander folgenden kurzfristigen Fehlerströmen ein wiederholtes Auslösen des Fehlerstromschutzschalters 1 verhindert wird.

Nachfolgend wird das Verfahren zum Betrieb der als besonders vorteilhaft angesehenen sechsten Ausführungsform im Detail beschrieben.

In der sechsten bevorzugten Ausführungsform wird der Fehlerstrom von einem Fehlerstromdetektor 2 in ein Fehlerstromsignal abgebildet, das Fehlerstromsignal anschließend verstärkt und von einem Gleichrichter 3 gleichgerichtet. In weiterer Folge wird ein Energiespeicherbauteil 5 durch das Fehlerstromsignal aufgeladen und der Ladungszustand des Energiespeicherbauteils 5 mit einem vorgegebenen Wert des Komparators 6 verglichen, welcher den Auslösefehlerstrom repräsentiert.

Wenn der Ladezustand der Energiespeicherschaltung 5 größer ist, als der vorgegebene Wert des Komparators 6, wird ein Signal am Ausgang des Komparators ausgegeben, welches in Folge noch verstärkt wird. Ein Aktuator 7 wird durch das verstärkte Signal des Komparators aktiviert, welcher die Schaltkontakte 8, über welche die elektrischen Leitungen 9 des zu überwachenden elektrischen Netzes geführt werden, betätigt, wodurch der elektrische Stromkreis unterbrochen wird.

Zusätzlich wird das Fehlerstromsignal vom Gleichrichter 3 in einer zweiten Schaltungsanordnung 13 mit einem vorgegebenen Wert, welcher den Auslösefehlerstrom repräsentiert, verglichen. Wenn das Fehlerstromsignal diesen vorgegebenen Wert überschreitet, wird ein zweiter Timer 15 für die Dauer einer zweiten Zeitdauer aktiviert. Ein erster Timer 14 wird von dem zweiten Timer 15 aktiviert, wobei der erste Timer 14 für die erste Zeitdauer ein Signal ausgibt. Der erste Timer 14 wird dabei nur einmal in der zweiten Zeitdauer aktiviert. Ein erstes Schaltelement 12 wird vom ersten Timer 14 während der ersten Zeitdauer betätigt, welches den Energiespeicherbauteil entlädt, da der Ausgang des Energiespeicherbauteils 5 vom ersten Schaltelement 12 mit einer elektrischen Masse verbunden wird.

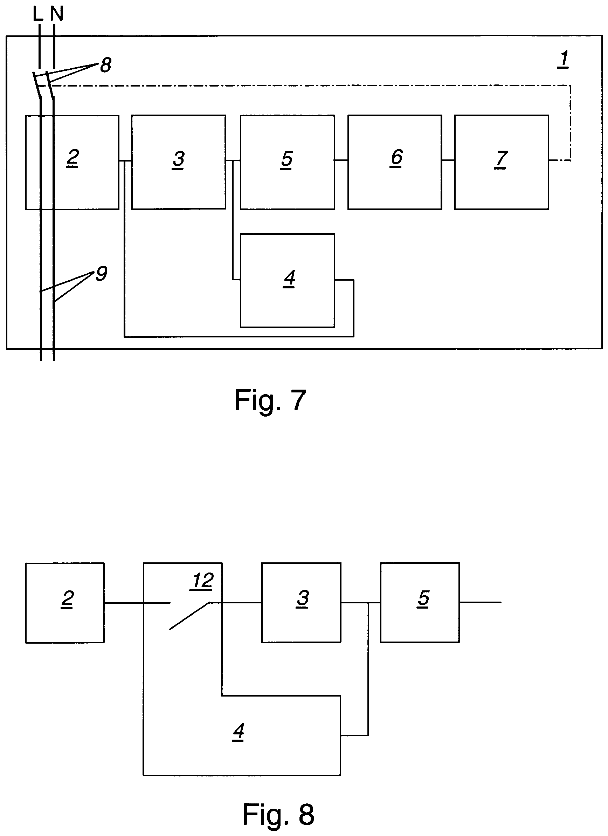

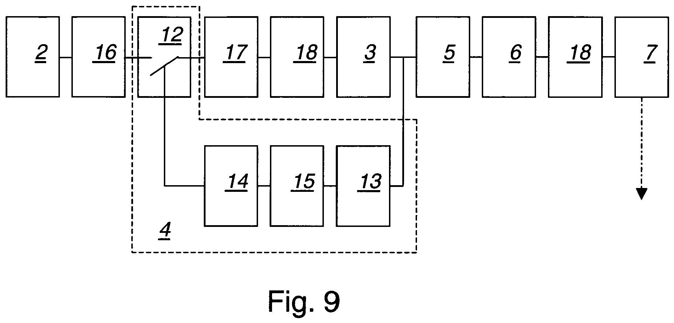

Fig. 7 zeigt eine zweite bevorzugte Ausführungsform eines Fehlerstromschutzschalters 1 gemäß der gegenständlichen Erfindung. Fig. 9 zeigt eine dritte bevorzugte Ausführungsform eines Fehlerstromschutzschalters 1, wobei es sich um eine besonders bevorzugte Weiterbildung der zweiten bevorzugten Ausführungsform handelt. Sofern nicht anders dargelegt sind die einzelnen Baugruppen, sowohl des Fehlerstromschutzschalters 1 als auch der ersten Schaltungsanordnung 4 entsprechend den vorstehenden Ausführungen zur ersten bevorzugten Ausführungsform eines Fehlerstromschutzschalters 1 ausgebildet.

Die zweite und die dritten bevorzugte Ausführungsform eines Fehlerstromschutzschalters 1 unterscheiden sich von der ersten bevorzugten Ausführungsform gemäß Fig. 1 insbesondere durch die Ausbildung der ersten Schaltungsanordnung 4, sowie den Bereich in dem diese schaltungstechnisch auf die restlichen Baugruppen des betreffenden Fehlerstromschutzschalters 1 einwirkt und/oder mit diesen verbunden ist.

Gemäß dieser bevorzugten Ausführungsformen gemäß den Fig. 7 bis 9 ist vorgesehen, dass die erste Schaltungsanordnung 4 zum Unterbrechen einer Verbindung zwischen dem Fehlerstromdetektor 2 und der Auslöseschaltung während der ersten Zeitdauer nach dem Detektieren eines Fehlerstromes vorgebbarer Größe ausgebildet ist. Dies ist in Fig. 7 lediglich durch eine Verbindung der ersten Schaltungsanordnung 4 mit der Verbindung zwischen dem Fehlerstromdetektor 2 und dem Gleichrichter 3 veranschaulicht. Dadurch kann sicher eine weitere Ladung eines Energiespeicherbauteils 5 unterbunden werden und die Auslösung verhindert werden.

Dabei ist insbesondere vorgesehen, dass das erste Schaltelement 12 schaltungstechnisch mit dem Fehlerstromdetektor 2 verbunden ist. Dabei kann vorgesehen sein, dass das erste Schaltelement 12 wie bereits beschrieben als Halbleiterschalter ausgebildet ist, es kann jedoch auch mechanischer Trennkontakt vorgesehen sein. Aufgrund der erzielbaren kurzen Schaltzeiten ist bevorzugt die Ausbildung des ersten Schaltelements 12 als Halbleiterschalter vorgesehen. Bevorzugt ist dabei vorgesehen, dass das erste Schaltelement 12 in einem angesteuerten Zustand eine elektrische Verbindung zwischen dem Fehlerstromdetektor 2 und dem Gleichrichter 3 unterbricht. Es kann hiebei auch vorgesehen sein, dass die Verbindung zwischen dem Fehlerstromdetektor 2 und der weiteren Auslöseschaltung, insbesondere zwischen dem Fehlerstromdetektor 2 und dem Gleichrichter 3, nicht einfach nur unterbrochen wird, sondern dass wenigstens eine der beiden Seiten auf ein definiertes Potential, etwa auf Masse geschaltet wird. Fig. 8 zeigt eine derartige bevorzugte Ausbildung, wobei auf die weiteren Details der ersten Schaltungsanordnung 4 nicht eingegangen wird.

Fig. 9 zeigt eine besonders bevorzugte dritte Ausführungsform eines Fehlerstromschutzschalters 1, welche im Detail beschrieben wird:

Der Fehlerstromdetektor 2 ist als Summenstromwandler ausgebildet. Dieser weist gemäß der bevorzugten Ausführungsform sog. Schutzdioden 16 auf. Dabei handelt es sich um gegenpolig geschaltete Dioden, welche bevorzugt auf einer weiteren Wicklung um den Kern des Summenstromwandlers angeordnet sind, welche etwa als Tertiärwicklung bezeichnet wird. Es kann aber auch vorgesehen sein, diese an der Sekundärwicklung anzuordnen.

An dem Ausgang des Summenstromwandlers, welcher das Fehlerstromsignal bereitstellt, gegebenenfalls nach dem Schutzdioden, ist das erste Schaltelement 12 schaltungstechnisch angeordnet. An dieses ist bevorzugt ein definierter Lastwiderstand 17, auch als Bürde bezeichnet, angeschlossen. Dieser nachfolgend ist eine Verstärkerschaltung 18 geschaltet, deren Ausgang an den Gleichrichter 3 angeschlossen ist, welcher Ausgangsseitig sowohl an die erste Schaltungsanordnung 4 als auch die Energiespeicherschaltung bzw. das Energiespeicherbauteil 5 angeschlossen ist.

Das Energiespeicherbauteil 5 ist wie bereits dargelegt an den Komparator 6 angeschlossen, dessen Ausgangssignal gemäß der bevorzugten Ausführungsform in einer weiteren Verstärkerschaltung 18 verstärkt wird, und nachfolgend einem Aktuator 7 zugeführt wird, welcher gegebenenfalls die Trennung der Schaltkontakte herbeiführt.

Die erste Schaltungsanordnung weist - wie bereits dargelegt - die zweite Schaltungsanordnung 13, sowie den ersten und zweiten Timer 14, 15 auf, welche das erste Schaltelement 12 steuern.

Hinsichtlich der bevorzugten Ausführungsformen der ersten Schaltungsanordnung 4, insbesondere der ersten und zweiten Timer 14, 15, ist die Kombination jeder Ausführungsform, welche im Rahmen der Beschreibung der ersten bevorzugten Ausführungsform eines Fehlerstromschutzschalters 1 beschrieben wurde, mit den weiteren Ausführungsformen eines Fehlerstromschutzschalters 1 explizit vorgesehen. Insbesondere ist die Ausbildung der ersten Schaltungsanordnung 4 gemäß Fig. 5 oder 6 zusammen mit der zweiten bzw. dritten Ausführungsform eines Fehlerstromschutzschalters 1 vorgesehen.

## Patentansprüche

1. Fehlerstromschutzschalter (1) mit Schaltkontakten (8) und wenigstens einem Fehlerstromdetektor (2) zur Ermittlung eines Fehlerstromsignals, wobei der Fehlerstromschutzschalter (1) dazu ausgebildet ist, bei Auftreten eines Fehlerstroms größer einem vorgebbaren Auslösestrom das Trennen der Schaltkontakte (8) zu verursachen, **dadurch gekennzeichnet, dass** der Fehlerstromschutzschalter (1) eine erste Schaltungsanordnung (4) aufweist, welche ausgebildet ist, bei Auftreten eines Fehlerstromes von geringerer zeitlicher Dauer als einer halben Periodenlänge einer Netzfrequenz eines elektrischen Netzes, ein Auslösen des Fehlerstromschutzschalters (1) zu hemmen, und dass die erste Schaltungsanordnung (4) zur Deaktivierung und/oder Unwirksammachung einer Auslöseschaltung des Fehlerstromschutzschalters (1) während einer ersten Zeitdauer ausgebildet ist.

2. Fehlerstromschutzschalter (1) nach Anspruch 1, **dadurch gekennzeichnet, dass** die erste Zeitdauer 75%, insbesondere 60%, vorzugsweise wenigstens 50%, der Periodenlänge des zu schützenden elektrischen Netzes beträgt.

3. Fehlerstromschutzschalter (1) nach Anspruch 1 oder 2, **dadurch gekennzeichnet, dass** die erste Schaltungsanordnung (4) zum Entladen eines Energiespeicherbauteils (5) der Auslöseschaltung während der ersten Zeitdauer nach dem Detektieren eines Fehlerstromes vorgebbarer Größe ausgebildet ist.

4. Fehlerstromschutzschalter (1) nach Anspruch 1 oder 2, **dadurch gekennzeichnet, dass** die erste Schaltungsanordnung (4) zum Unterbrechen einer Verbindung zwischen dem Fehlerstromdetektor (2) und der Auslöseschaltung während der ersten Zeitdauer nach dem Detektieren eines Fehlerstromes vorgebbarer Größe ausgebildet ist.

5. Fehlerstromschutzschalter (1) nach einem der Ansprüche 1 bis 4, **dadurch gekennzeichnet, dass** die erste Schaltungsanordnung (4) eine zweite Schaltungsanordnung (13) umfasst, zum Vergleich des Fehlerstromsignals mit einem Grenzwert.

6. Fehlerstromschutzschalter (1) nach einem der Ansprüche 1 bis 5, **dadurch gekennzeichnet, dass** die erste Schaltungsanordnung (4) ein erstes Schaltelement (12), insbesondere einen Halbleiterschalter, umfasst.

7. Fehlerstromschutzschalter (1) nach Anspruch 6, **dadurch gekennzeichnet, dass** das erste Schaltelement (12) schaltungstechnisch mit dem Energiespeicherbauteil (5) verbunden ist.

8. Fehlerstromschutzschalter (1) nach Anspruch 6 oder 7, **dadurch gekennzeichnet, dass** das erste Schaltelement (12) in einem durchgeschalteten Zustand einen Ausgang des Energiespeicherbauteils (5) mit einer elektrischen Masse verbindet.

9. Fehlerstromschutzschalter (1) nach Anspruch 6 oder 7, **dadurch gekennzeichnet, dass** das erste Schaltelement (12) im durchgeschalteten Zustand einen Ausgang des Energiespeicherbauteils (5) das Energiespeicherbauteil (5) gegen Masse überbrückt.

10. Fehlerstromschutzschalter (1) nach Anspruch 8, **dadurch gekennzeichnet, dass** das erste Schaltelement (12) schaltungstechnisch mit dem Fehlerstromdetektor (2) verbunden ist.

11. Fehlerstromschutzschalter (1) nach Anspruch 6 oder 10, **dadurch gekennzeichnet, dass** das erste Schaltelement (12) in einem angesteuerten Zustand eine elektrische Verbindung zwischen dem Fehlerstromdetektor (2) und dem Gleichrichter (3) unterbricht.

12. Fehlerstromschutzschalter (1) nach einem der Ansprüche 6 bis 11, **dadurch gekennzeichnet, dass** die erste Schaltungsanordnung (4) einen ersten Timer (14) umfasst, zur Ansteuerung des ersten Schaltelements (12) während der ersten Zeitdauer.

13. Fehlerstromschutzschalter (1) nach Anspruch 12, **dadurch gekennzeichnet, dass** die erste Schaltungsanordnung (4) einen zweiten Timer (15) umfasst, zur Deaktivierung des ersten Timers (14) während einer, an die erste Zeitdauer anschließenden, zweiten Zeitdauer.

14. Fehlerstromschutzschalter (1) nach Anspruch 13, **dadurch gekennzeichnet, dass** die zweite Zeitdauer größer ist als die erste Zeitdauer.

15. Fehlerstromschutzschalter (1) nach Anspruch 13 oder 14, **dadurch gekennzeichnet, dass** ein Ausgang der zweiten Schaltungsanordnung (13) schaltungstechnisch mit einem Eingang des ersten Timers (14) und/oder des zweiten Timers (15) verbunden ist.

16. Fehlerstromschutzschalter (1) nach Anspruch 13, 14 oder 15, **dadurch gekennzeichnet, dass** ein Ausgang des zweiten Timers (15) schaltungstechnisch mit einem Eingang des ersten Timers (14) verbunden ist.

17. Verfahren zum Betrieb eines Fehlerstromschutzschalters (1), wobei ein auftretender Fehlerstrom detektiert und ein Fehlerstromsignal erzeugt wird, wobei durch das Fehlerstromsignal eine Energiespeicherschaltung (5) aufgeladen wird und im Wesentlichen gleichzeitig das Fehlerstromsignal mit einem, einem Auslösefehlerstrom entsprechenden Vergleichswert verglichen wird, wobei wenn das Fehlerstromsignal größer als der Vergleichswert ist, ein Auslösen des Fehlerstromschutzschalters (1) für eine zeitliche Dauer einer halben Periodenlänge einer Netzfrequenz eines elektrischen Netzes gehemmt wird, indem eine Auslöseschaltung des Fehlerstromschutzschalters (1) während einer ersten Zeitdauer deaktiviert und/oder unwirksam gemacht wird.

18. Verfahren nach Anspruch 17, **dadurch gekennzeichnet, dass** während einer ersten Zeitdauer nach dem Detektieren eines Fehlerstromes der Energiespeicherbauteil (5) entladen oder eine elektrische Verbindung zwischen dem Fehlerstromdetektor (2) und dem Gleichrichter (3) unterbrochen wird.

19. Verfahren nach Anspruch 18, **dadurch gekennzeichnet, dass** während einer, der ersten Zeitdauer nachfolgenden zweiten Zeitdauer eine Entladung des Energiespeicherbauteils (5) bzw. eine Unterbrechung der elektrischen Verbindung zwischen dem Fehlerstromdetektor (2) und dem Gleichrichter (3) verhindert wird.

## Claims

1. Residual-current-operated circuit breaker (1) with switching contacts (8) and at least one residual current detector (2) to detect a residual current signal, wherein the residual-current-operated circuit breaker (1) is designed to cause the disconnection of the switching contacts (8) if a residual current greater than a predeterminable tripping current occurs, **characterised in that** the residual-current-operated circuit breaker (1) has a first circuit arrangement (4) that is designed to inhibit tripping of the residual-current-operated circuit breaker (1) if a residual current with a time duration of less than half a period length of a mains frequency of an electrical mains system occurs, and that the first circuit arrangement (4) is designed to deactivate and/or render ineffective a trip circuit of the residual-current-operated circuit breaker (1) during a first time period.

2. Residual-current-operated circuit breaker (1) according to claim 1, **characterised in that** the first time period is 75%, more particularly 60%, preferably at least 50%, of the period length of the electrical mains system that is to be protected.

3. Residual-current-operated circuit breaker (1) according to claim 1 or 2, **characterised in that** the first circuit arrangement (4) is designed to discharge an energy storage component (5) of the trip circuit during the first time period after the detection of a residual current of predeterminable size.

4. Residual-current-operated circuit breaker (1) according to claim 1 or 2, **characterised in that** the first circuit arrangement (4) is designed to break a connection between the residual current detector (2) and the trip circuit during the first time period after the detection of a residual current of predeterminable size.

5. Residual-current-operated circuit breaker (1) according to one of the claims 1 to 4, **characterised in that** the first circuit arrangement (4) comprises a second circuit arrangement (13), to compare the residual current signal with a limit value.

6. Residual-current-operated circuit breaker (1) according to one of the claims 1 to 5, **characterised in that** the first circuit arrangement (4) comprises a first switching element (12), more particularly a semiconductor switch.

7. Residual-current-operated circuit breaker (1) according to claim 6, **characterised in that** the first switching element (12) is connected by circuitry with the energy storage component (5).

8. Residual-current-operated circuit breaker (1) according to claim 6 or 7, **characterised in that** the first switching element (12), in a conductive state, connects an output of the energy storage component (5) with an electrical earth.

9. Residual-current-operated circuit breaker (1) according to claim 6 or 7, **characterised in that** the first switching element (12), in the conductive state, bridges an output of the energy storage component (5) the energy storage component (5) to earth.

10. Residual-current-operated circuit breaker (1) according to claim 8, **characterised in that** the first switching element (12) is connected by circuitry with the residual current detector (2).

11. Residual-current-operated circuit breaker (1) according to claim 6 or 10, **characterised in that** the first switching element (12), in an actuated state, breaks an electrical connection between the residual current detector (2) and the rectifier (3).

12. Residual-current-operated circuit breaker (1) according to one of the claims 6 to 11, **characterised in that** the first circuit arrangement (4) comprises a first timer (14), to actuate the first switching element (12) during the first time period.

13. Residual-current-operated circuit breaker (1) according to claim 12, **characterised in that** the first circuit arrangement (4) comprises a second timer (15), to deactivate the first timer (14) during a second time period following on from the first time period.

14. Residual-current-operated circuit breaker (1) according to claim 13, **characterised in that** the second time period is greater than the first time period.

15. Residual-current-operated circuit breaker (1) according to claim 13 or 14, **characterised in that** an output of the second circuit arrangement (13) is connected by circuitry with an input of the first timer (14) and/or of the second timer (15).

16. Residual-current-operated circuit breaker (1) according to claim 13, 14 or 15, **characterised in that** an output of the second timer (15) is connected by circuitry with an input of the first timer (14).

17. Method for operating a residual-current-operated circuit breaker (1), wherein an occurring residual current is detected and a residual current signal is generated, wherein as a result of the residual current signal an energy storage circuit (5) is charged and essentially simultaneously the residual current signal is compared with a comparison value corresponding to a residual operating current, wherein, if the residual current signal is greater than the comparison value, any tripping of the residual-current-operated circuit breaker (1) is inhibited for a time duration of half a period length of a mains frequency of an electrical mains system by a trip circuit of the residual-current-operated circuit breaker (1) being deactivated and/or rendered ineffective during a first time period.

18. Method according to claim 17, **characterised in that** during a first time period after the detection of a residual current the energy storage component (5) is discharged or an electrical connection between the residual current detector (2) and the rectifier (3) is broken.

19. Method according to claim 18, **characterised in that** during a second time period following the first time period a discharge of the energy storage component (5) and a break of the electrical connection between the residual current detector (2) and the rectifier (3) are prevented.

## Revendications

1. Interrupteur différentiel (1) avec des contacts de commutation (8) et au moins un détecteur de courant de fuite (2) pour détecter un signal de courant de fuite, dans lequel l'interrupteur différentiel (1) est conçu de manière à provoquer, à l'apparition d'un courant de fuite supérieur à un courant de déclenchement prédéterminable, la séparation des contacts de commutation (8), **caractérisé en ce que** l'interrupteur différentiel (1) présente un premier agencement de circuit (4) qui est conçu, lors de l'apparition d'un courant de fuite de plus faible durée temporaire qu'une demi-longueur de période d'une fréquence d'un réseau électrique, pour bloquer un déclenchement de l'interrupteur différentiel (1), et **en ce que** le premier agencement de circuit (4) est conçu pour désactiver et/ou invalider un circuit de déclenchement de l'interrupteur différentiel (1) au cours d'une première période de temps.

2. Interrupteur différentiel (1) selon la revendication 1, **caractérisé en ce que** la première période de temps atteint 75 %, en particulier 60 %, de préférence 50 %, de la longueur de période du réseau électrique à protéger.

3. Interrupteur différentiel (1) selon la revendication 1 ou 2, **caractérisé en ce que** le premier agencement de circuit (4) est conçu pour décharger un composant accumulateur d'énergie (5) du circuit de déclenchement au cours de la première période de temps après la détection d'un courant de fuite de grandeur prédéterminable.

4. Interrupteur différentiel (1) selon la revendication 1 ou 2, **caractérisé en ce que** le premier agencement de circuit (4) est conçu pour interrompre une connexion entre le détecteur de courant de fuite (2) et le circuit de déclenchement au cours de la première période de temps après la détection d'un courant de fuite de grandeur prédéterminable.

5. Interrupteur différentiel (1) selon l'une quelconque des revendications 1 à 4, **caractérisé en ce que** le premier agencement de circuit (4) comprend un second agencement de circuit (13) pour comparer le signal de courant de fuite à une valeur limite.

6. Interrupteur différentiel (1) selon l'une quelconque des revendications 1 à 5, **caractérisé en ce que** le premier agencement de circuit (4) comprend un premier élément de commutation (12), en particulier un commutateur à semiconducteur.

7. Interrupteur différentiel (1) selon la revendication 6, **caractérisé en ce que** le premier élément de commutation (12) est connecté au composant accumulateur d'énergie (5) par une technique de commutation.

8. Interrupteur différentiel (1) selon la revendication 6 ou 7, **caractérisé en ce que** le premier élément de commutation (12) connecte, à l'état commuté, une sortie du composant accumulateur d'énergie (5) à une masse électrique.

9. Interrupteur différentiel (1) selon la revendication 6 ou 7, **caractérisé en ce que** le premier élément de commutation (12) ponte, à l'état commuté, une sortie du composant accumulateur d'énergie (5) le composant accumulateur d'énergie (5) à la masse.

10. Interrupteur différentiel (1) selon la revendication 8, **caractérisé en ce que** le premier élément de commutation (12) est connecté au détecteur de courant de fuite (2) par une technique de commutation.

11. Interrupteur différentiel (1) selon la revendication 6 ou 10, **caractérisé en ce que** le premier élément de commutation (12) interrompt, à l'état commandé, une connexion électrique entre le détecteur de courant de fuite (2) et le redresseur (3).

12. Interrupteur différentiel (1) selon l'une quelconque des revendications 6 à 11, **caractérisé en ce que** le premier agencement de circuit (4) comprend une première minuterie (14) pour commander le premier élément de commutation (12) au cours de la première période de temps.

13. Interrupteur différentiel (1) selon la revendication 12, **caractérisé en ce que** le premier agencement de circuit (4) comprend une seconde minuterie (15) pour désactiver la première minuterie (14) au cours d'une seconde période de temps se rattachant à la première période de temps.

14. Interrupteur différentiel (1) selon la revendication 13, **caractérisé en ce que** la seconde période de temps est plus grande que la première période de temps.

15. Interrupteur différentiel (1) selon la revendication 13 ou 14, **caractérisé en ce qu'une** sortie du second agencement de circuit (13) est connectée par une technique de commutation à une entrée de la première minuterie (14) et/ou de la seconde minuterie (15).

16. Interrupteur différentiel (1) selon la revendication 13, 14 ou 15, **caractérisé en ce qu'une** sortie de la seconde minuterie (15) est connectée par une technique de commutation à une entrée de la première minuterie (14).

17. Procédé de commande d'un interrupteur différentiel (1), dans lequel l'apparition d'un courant de fuite est détectée et un signal de courant de fuite est produit, dans lequel un circuit accumulateur d'énergie (5) est chargé par le signal de courant de fuite et, de manière sensiblement simultanée, le signal de courant de fuite est comparé à une valeur de comparaison correspondant à un courant de fuite de déclenchement, dans lequel, si le signal de courant de fuite est plus grand que la valeur de comparaison, un déclenchement de l'interrupteur différentiel (1) est bloqué pendant une période temporaire d'une demi-longueur de période d'une fréquence d'un réseau électrique en désactivant et/ou en invalidant un circuit de déclenchement de l'interrupteur différentiel (1) au cours d'une première période de temps.

18. Procédé selon la revendication 17, **caractérisé en ce que,** au cours d'une première période de temps après la détection d'un courant de fuite, le composant accumulateur d'énergie (5) est déchargé ou une connexion électrique entre le détecteur de courant de fuite (2) et le redresseur (3) est interrompue.

19. Procédé selon la revendication 18, **caractérisé en ce que,** au cours d'une seconde période de temps suivant la première période de temps, une décharge du composant accumulateur d'énergie (5) ou une interruption de la connexion électrique entre le détecteur de courant de fuite (2) et le redresseur (3) est empêchée.
